# EUROPÄISCHE PATENTANMELDUNG

(11) **EP 4 174 151 A1**
(43) Veröffentlichungstag der Anmeldung: **03.05.2023**
(21) Anmeldenummer: 21020530.8
(22) Anmeldetag: 27.10.2021
(51) Int. Cl.: C10J 3/50, C01B 3/36, C10J 3/72, F23D 17/00

(54) **PARTIALOXIDATIONSREAKTOR MIT AUFHEIZBRENNER ZUM HERSTELLEN VON SYNTHESEGAS**

(71) Anmelder: L'Air Liquide Société Anonyme pour l'Etude et l'Exploitation des Procédés Georges Claude, 75321 Paris (FR)
(72) Erfinder: Lehmann, Maik, D-60439 Frankfurt am Main (DE); Roesch, Alexander, D-60439 Frankfurt am Main (DE)
(74) Vertreter: Dropsch, Holger

(57) **Zusammenfassung**

Die Erfindung betrifft einen Partialoxidationsreaktor (POX-Reaktor) mit Aufheizbrenner zum Herstellen von Synthesegas durch partielle Oxidation von fluiden kohlenstoffhaltigen Brennstoffen in Gegenwart eines sauerstoffhaltigen Oxidationsmittels sowie ein Verfahren zur Inbetriebnahme des Partialoxidationsreaktors. Erfindungsgemäß erfolgt das Vorheizen des Partialoxidationsreaktors durch einen eigenen Aufheizbrenner, der durch einen der Medienkanäle des POX-Brenners eingeführt wird, ohne dass der gesamte POX-Brenner demontiert werden muss.

## Beschreibung

### Gebiet der Erfindung

Die Erfindung betrifft einen Partialoxidationsreaktor (POX-Reaktor) mit Aufheizbrenner zum Herstellen von Synthesegas durch partielle Oxidation von fluiden kohlenstoffhaltigen Brennstoffen in Gegenwart eines sauerstoffhaltigen Oxidationsmittels sowie ein Verfahren zur Inbetriebnahme des Partialoxidationsreaktors.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Oxosynthese, die Herstellung von Ammoniak nach dem Haber-Bosch-Verfahren oder die Fischer-Tropsch-Synthese. Eine Möglichkeit zur Herstellung solcher Synthesegase besteht in der partiellen Oxidation fluider, förderbarer Einsatzstoffe auf Kohlenstoffbasis, beispielsweise Gase wie Erdgas, Flüssigkeiten wie Erdöl oder Raffinerieabfallströme, kohlenstoffhaltige Suspensionen oder feinteilige, als Flugstrom herangeführte, kohlenstoffhaltige Feststoffpartikel, in einem Partialoxidationsreaktor, der im Wesentlichen einen Reaktorbehälter und einen mit diesem mittels einer ersten lösbaren Verbindungsvorrichtung gasdicht verbindbaren, zumeist eingangsseitig angeordneten Brenner (Partialoxidationsbrenner, POX-Brenner) umfasst.

Ein gängiges Verfahren zur Herstellung von Synthesegasen ist die autotherme Flugstromvergasung von gasförmigen, flüssigen oder festen Brennstoffen, wie sie beispielsweise in der Patentschrift DE 10 2006 059 149 B4 beschrieben ist. Am Kopf eines Reaktors sind zentral ein Zünd- und Pilotbrenner sowie rotationssymmetrisch zur Reaktorachse drei Vergasungsbrenner angeordnet. Über die Vergasungsbrenner wird einem Vergasungsraum des Reaktors Kohlenstaub mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur Kühlung von Rohgas und Schlacke Wasser eingedüst wird. Die Schlacke lagert sich im Wasserbad ab und wird über einen Schlackeaustrag abgeführt. Das gequenchte Rohgas wird wasserdampfgesättigt aus dem Quenchraum abgezogen und in nachfolgenden Reinigungsstufen gereinigt. Da der Brennstoff direkt mit dem Oxidationsmittel umgesetzt wird, ist es vorteilhaft, Oxidationsmittel und Brennstoff koaxial oder koannular zu führen.

Auch die Patentschrift US 5,549,877 A1 beschreibt ein Verfahren und eine Vorrichtung zur Herstellung von Synthesegas, wobei ein sauerstoffhaltiges Oxidationsmittel zentral am Reaktorkopf zugeführt und gemeinsam mit ringförmig um die Oxidationsmittelzufuhr zugeführtem Brennstoff in den Reaktionsraum eingeführt wird, in dem der Brennstoff zunächst unterstöchiometrisch umgesetzt wird. Es bildet sich eine Flamme aus, die nach unten in den Reaktionsraum fortschreitet. In einer Rezirkulationszone strömen die in der Flamme vorhandenen Materialien nach oben zurück. In die Reaktionszone wird stromabwärts über eine ringförmige Leitung ein zusätzlicher Strom an Oxidationsmittel zugeführt, so dass sich eine weiter ausgedehnte Flammenzone bildet.

Die in der DE-Offenlegungsschrift DE 10 2010 004 787 A1 gelehrte Erfindung betrifft die Herstellung von Synthesegas durch partielle Oxidation von flüssigem oder gasförmigem, kohlenstoffhaltigem Brennstoff in Gegenwart eines sauerstoffhaltigen Oxidationsmittels mittels eines konstruktiv einfachen Brenners, wobei der Brennstoff, das Oxidationsmittel und ein Moderator getrennt dem Brenner zugeführt werden und wobei der Brennstoff und der Moderator in einer Mischkammer des Brenners vermischt werden, bevor sie mit dem Oxidationsmittel in Kontakt gebracht werden. Um insbesondere beim Betrieb mit transienten Bedingungen die Belastung des Brenners zu verringern, wird das Oxidationsmittel zentral durch eine Austrittsöffnung des Brenners in eine Brennkammer eingeführt und das Gemisch aus Brennstoff und Moderator durch die Austrittsöffnung konzentrisch um das Oxidationsmittel in die Brennkammer eingeführt.

Um Partialoxidationsreaktoren der beschriebenen Art in Betrieb zu nehmen, ist es erforderlich, die Vorrichtung, insbesondere den Reaktorbehälter, vorzuheizen. Hierzu wird beispielsweise in der internationalen Patentanmeldung WO 2015/155256 A1 und der europäischen Patentanmeldung EP 0936182 A2 vorgeschlagen, die feuerfeste Ausmauerung des Reaktorbehälters durch Hindurchleiten von extern mittels einer Hilfsanlage erzeugtem, heißem Heizgas aufzuheizen. Zusätzlich soll die Zusammensetzung des Prozessgasstroms soweit verändert werden, dass sich eine niedrigere Selbstentzündungstemperatur ergibt. Nachteilig ist dabei, dass eine eigenständige Hilfsanlage zur Heizgaserzeugung benötigt wird. Zudem ist die Variation der Zusammensetzung des Prozessgasstroms nur innerhalb bestimmter Grenzen möglich, die beispielsweise durch die Förderbarkeit des kohlenstoffhaltigen Fluids und Sicherheitsaspekte wie Explosionsgrenzen vorgegeben sind.

Da POX-Reaktoren der beschriebenen Art häufig keinen eigenen, fest installierten Zünd- oder Aufheizbrenner umfassen, besteht ein weiterer üblicher Weg zum Vorheizen darin, für das Aufheizen des Reaktorbehälters den POX-Brenner selbst zu benutzen. Da dieser allerdings oft keinen eigenen Zündbrenner oder Pilotbrenner umfasst, muss zunächst der Reaktorbehälter auf andere Weise bis über die Selbstentzündungstemperatur eines zugeführten Brennstoff-Oxidationsmittel-Gemisches aufgeheizt werden. Dies wird auf folgende Weise durchgeführt:
- Der POX-Brenner wird durch Lösen der ersten lösbaren Verbindungsvorrichtung, beispielsweise des Hauptflanschs zwischen Reaktorbehälter und POX-Brenner, vom Reaktorbehälter getrennt und entfernt.
- Ein dedizierter Aufheizbrenner mit Zündvorrichtung wird über die erste lösbare Verbindungsvorrichtung mit dem Reaktorbehälter gasdicht verbunden und der Reaktorbehälter durch Verbrennen eines Brenngas-Oxidationsmittel-Gemisch aufgeheizt.
- Nach Erreichen einer zuvor festgelegten Zieltemperatur, beispielsweise im Temperaturbereich zwischen 1000 und 1300 °C, wird die Brenngas-Oxidationsmittel-Zufuhr zum Aufheizbrenner beendet, die erste lösbare Verbindungsvorrichtung gelöst, der Aufheizbrenner entfernt, der POX-Brenner eingebaut und mittels der ersten lösbaren Verbindungsvorrichtung gasdicht mit dem Reaktorbehälter verbunden.
- Nunmehr erfolgt die Zufuhr des fluiden kohlenstoffhaltigen Brennstoffs und des sauerstoffhaltigen Oxidationsmittels zum POX-Brenner. Die Verbrennung setzt durch Selbstentzündung des Stoffgemischs ein und der POX-Reaktor wird weiter aufgeheizt.
- Nach Erreichen der gewünschten POX-Reaktionstemperatur wird die Partialoxidationsreaktion durch geeignetes Einstellen der Stoffströme des fluiden kohlenstoffhaltigen Brennstoffs, des sauerstoffhaltigen Oxidationsmittels und optional eines Moderators, beispielweise Wasserdampf oder Kohlendioxid, in Gang gesetzt.

Der beschriebene Vorgang ist zeitaufwändig und er birgt auch einige Sicherheitsrisiken für das Personal, das diese Arbeiten durchführt. Während des Austauschs muss sichergestellt werden, dass der POX-Reaktor unter Unterdruck steht, um zu vermeiden, dass heiße Gase aus der Flanschöffnung austreten und das Personal verletzen. Während des Brenneraustauschs darf die Temperatur nicht unter die Starttemperatur für die partielle Oxidation sinken, andernfalls muss der Aufheizbrenner wieder eingebaut und das Aufheizen wiederholt werden.

Es besteht daher Bedarf nach einem einfachen und sicheren Verfahren zur Inbetriebnahme eines POX-Reaktors und nach einer Vorrichtung, die dies ermöglicht.

### Beschreibung der Erfindung

Die Aufgabe der vorliegenden Erfindung besteht daher darin, einen Partialoxidationsreaktor (POX-Reaktor) mit Aufheizbrenner zum Herstellen von Synthesegas durch partielle Oxidation von fluiden kohlenstoffhaltigen Brennstoffen in Gegenwart eines sauerstoffhaltigen Oxidationsmittels sowie ein Verfahren zur Inbetriebnahme des Partialoxidationsreaktors anzugeben, die die erwähnten Nachteile des Stands der Technik nicht aufweisen.

Diese Aufgabe wird in einem ersten Aspekt der Erfindung durch einen Partialoxidationsreaktor (POX-Reaktor) mit Aufheizbrenner zum Herstellen von Synthesegas durch partielle Oxidation von fluiden kohlenstoffhaltigen Brennstoffen in Gegenwart eines sauerstoffhaltigen Oxidationsmittels mit den Merkmalen des Anspruchs 1 und in einem zwölften Aspekt der Erfindung durch ein Verfahren zur Inbetriebnahme eines Partialoxidationsreaktors (POX-Reaktor) zum Herstellen von Synthesegas durch partielle Oxidation von fluiden kohlenstoffhaltigen Brennstoffen in Gegenwart eines sauerstoffhaltigen Oxidationsmittels gelöst. Weitere, alternative oder bevorzugte Aspekte der Erfindung ergeben sich aus den Unteransprüchen der jeweiligen Kategorie.

Unter fluiden kohlenstoffhaltigen Brennstoffen werden Stoffe oder Stoffgemische verstanden, die unter dem Einfluss von Scherkräften fließen, also im Wesentlichen Gase oder Flüssigkeiten, aber auch Suspensionen oder Aerosole, und die Kohlenstoff oder kohlenstoffhaltige Verbindungen enthalten. Beispiele sind Gase wie Erdgas, Flüssigkeiten wie Erdöl oder Raffinerieabfallströme, kohlenstoffhaltige Suspensionen (sog. Slurries) oder feinteilige, als Flugstrom herangeführte, kohlenstoffhaltige Feststoffpartikel.

Unter sauerstoffhaltigen Oxidationsmitteln werden Stoffe oder Stoffgemische verstanden, die Sauerstoff in elementarer, molekularer Form enthalten und die rein oder als Gemisch vorliegen. Beispiele hierfür sind Luft oder Reinsauerstoff-Gas oder sauerstoffangereicherte Luft. Im weiteren Sinne werden darunter auch Stoffe oder Stoffgemische verstanden, die Sauerstoff in chemisch gebundener, aber unter den Bedingungen der Partialoxidation freisetzbarer Form enthalten; ein Beispiel ist Distickstoffoxid N₂O.

Unter der Aussage, dass zwei Körper, beispielsweise die Bestandteile einer Verbindungsvorrichtung oder Befestigungselemente, in lösbarer Weise verbindbar sind, wird verstanden, dass diese auf rein mechanische Weise und zerstörungsfrei, also ohne Überwindung chemischer Bindungskräfte reversibel getrennt und auf rein mechanische Weise wieder verbunden werden können. Daher sind unter diese Art der Verbindung insbesondere formschlüssige und kraftschlüssige Fügeverfahren zu verstehen. Formschlüssige Verbindungen werden durch die Formgebung der zu verbindenden Körper verbunden. Kraftschlüssige Verbindungen werden durch Reibungskräfte zusammengehalten. Als Beispiele für reversibel lösbare Verbindungen seien Stecken, Verschrauben, Klemmen und Nietverbindungen genannt, da zwar die Niete zum Trennen zerstört werden müssen, aber nicht die gefügten Bauteile.

Im Gegensatz hierzu wird unter der Aussage, dass zwei Körper, beispielsweise die Bestandteile einer Verbindungsvorrichtung, in nicht reversibel lösbarer Weise verbindbar sind, verstanden, dass beim Lösen der Verbindung chemischer Bindungskräfte überwunden werden müssen, wobei eine gewisse Zerstörung zumindest des Verbindungsmaterials auftritt. Man spricht hierbei auch von stoffschlüssigen Verbindungen, die eine Verbindung im Werkstoff selbst herstellen. Dazu zählen Schweiß- und Lötverbindungen sowie Klebeverbindungen. Kennzeichnend ist es dabei, dass beim erneuten Herstellen einer Verbindung zwischen den zuvor getrennten Körpern erneut ein Hilfsstoff aufgebracht werden muss, beispielsweise Schweißmittel, Lot oder Klebstoff.

Im Zusammenhang mit einer lösbaren Verbindungsvorrichtung werden Dichtungselemente benötigt, die für die Gasdichtigkeit der Verbindung sorgen, sowie lösbare Befestigungselemente, die beispielsweise eine kraftschlüssige Verbindung der Teile der Verbindungsvorrichtung bewirken. Als Beispiel kann eine Flanschverbindung genannt werden, wobei die Teile der Verbindungsvorrichtung mit Flanschen versehene Rohrstücke sind, zwischen denen ein Dichtungselement, beispielsweise eine ringförmige Flachdichtung angeordnet ist und die mit Schrauben und Muttern als lösbare Befestigungselemente kraftschlüssig verbunden werden.

Unter den Bedingungen der partiellen Oxidation sind die dem Fachmann an sich bekannten Reaktions- und Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

Das Erfordernis, dass die Zufuhrkanäle so ausgestaltet sind, dass eine Vermischung des Brennstoffs, des Moderators und des Oxidationsmittels erst außerhalb des Brenners erfolgt, wird dadurch erfüllt, dass die Größe der Querschnittsflächen der Zufuhrkanäle in Bezug auf den durchströmenden Sollvolumenstrom so gewählt wird, dass entsprechend hohe Strömungsgeschwindigkeiten erreicht werden.

Der Erfindung liegt die Erkenntnis zugrunde, dass es vorteilhaft ist, bei einem Partialoxidationsreaktor den Aufheizbrenner durch einen der Medienkanäle (synonym: Zufuhrkanäle) einzuführen, anstatt die erste lösbare Verbindungsvorrichtung zwischen POX-Brenner und Reaktorbehälter zu öffnen und den POX-Brenner komplett zu entfernen.

POX-Brenner im Sinne der Erfindung umfassen koaxial und konzentrisch angeordneten Rohre mit bevorzugt kreisförmigem Querschnitt, wobei das Zentralrohr und die durch weitere, das Zentralrohr jeweils koaxial und konzentrisch umgebene Rohre gebildeten Ringspalte als Medienkanäle bzw. Zufuhrkanäle dienen. Dabei werden erfindungsgemäß eines oder mehrere der koaxial und konzentrisch angeordneten Rohre, beispielsweise das Zentralrohr und ggf. zusätzlich weitere Rohre von innen nach außen oder alle Rohre bis auf das äußerste Rohr ausgebaut. Das oder die verbliebenen Rohre, beispielsweise das äußerste Rohr, werden verwendet, um einen Aufheizbrenner in den Reaktor einzuführen, der eine Zündvorrichtung und ein Flammenüberwachungssystem umfasst.

Ein Vorteil dieser Vorgehensweise besteht darin, dass es nicht mehr notwendig ist, die erste lösbare Verbindungsvorrichtung zwischen POX-Brenner und Reaktorbehälter zu öffnen und den POX-Brenner zu entfernen, sondern es wird eine zweite lösbare Verbindungsvorrichtung geöffnet, die im montierten Zustand des POX-Brenners den einen Teil der koaxial und konzentrisch angeordneten Rohre mit den übrigen Rohren gasdicht verbindet. Diese zweite lösbare Verbindungsvorrichtung kann ebenfalls als Flansch ausgestaltet sein. Vorteilhaft ist es dabei, das die zweite lösbare Verbindungsvorrichtung kleiner ist als die erste lösbare Verbindungsvorrichtung, beispielsweise der Hauptflansch zwischen POX-Brenner und Reaktorbehälter, da eine kleinere Verbindungsvorrichtung schneller demontierbar und remontierbar ist und leichter abzudichten ist. Wenn beide Verbindungsvorrichtungen beispielsweise als Flansche ausgestaltet sind, weisen die kleineren Flansche der zweiten lösbare Verbindungsvorrichtung weniger Schraublöcher auf, so dass das Demontieren und das Remontieren schneller durchgeführt werden kann als bei dem Hauptflansch zwischen POX-Brenner und Reaktorbehälter. Die Schrauben und ggf. Muttern, die das Innenrohr bzw. die Innenrohre mit dem Rest des POX-Brenners verbinden, sind in der Regel kleiner und in geringerer Anzahl vorhanden. Daher ist es einfacher und weniger zeitaufwendig, sie festzuziehen. Ferner ist es einfacher, mit dem in der zweiten, kleineren Verbindungsvorrichtung verwendeten Dichtungselement, beispielsweise einer ringförmigen Flachdichtung im Falle einer Flanschverbindung, eine gasdichte Verbindung herzustellen, da das Risiko von Undichtigkeiten durch ungleichmäßiges Festziehen wegen der geringeren Anzahl der Schrauben sinkt. Zudem ist die zweite lösbare Verbindungsvorrichtung einer geringeren thermischen Belastung ausgesetzt als die erste lösbare Verbindungsvorrichtung, da die erste lösbare Verbindungsvorrichtung wegen ihrer größeren Nähe zur Verbrennungszone einer höheren Wärmestrahlung ausgesetzt ist, was das Risiko von Undichtigkeiten aufgrund thermischer Ausdehnung ihrer Bestandteile erhöht. Schließlich sinkt auch die Gefahr von Beschädigungen, wenn die erste lösbare Verbindungsvorrichtung, beispielsweise der Hauptflansch zwischen POX-Brenner und Reaktorbehälter, weniger häufig geöffnet werden muss.

Der Aufheizbrenner wird über das oder die verbleibenden Rohre des POX-Brenners in den POX-Reaktor eingeführt und mittels der zweiten lösbaren Verbindungsvorrichtung mit dem POX-Brenner gasdicht verbunden. Der Aufheizprozess wird durch Zünden des Aufheizbrenners gestartet und solange betrieben, bis die erforderliche Selbstentzündungstemperatur für ein Brennstoff-Oxidationsmittel-Gemisch erreicht wurde. Diese kann beispielweise im Falle von Erdgas ca. 600 °C betragen, wobei vorzugsweise auf eine etwas höhere Temperatur, beispielsweise 750 °C, aufgeheizt wird, um die Selbstentzündung des Brennstoff-Oxidationsmittel-Gemisch sicher zu gewährleisten, ohne dass eine eigene Zündvorrichtung am POX-Brenner erforderlich ist.

Sobald der Reaktorbehälter die erforderliche Selbstentzündungstemperatur erreicht hat, wird der Aufheizbrenner entfernt und die demontierten Zufuhrrohre des POX-Brenners werden remontiert. Nun wird entweder bereits durch Zuführen des fluiden kohlenstoffhaltigen Brennstoffs und des sauerstoffhaltigen Oxidationsmittels die Partialoxidation gestartet oder der Partialoxidationsreaktor wird durch weiteres Zuführen eines Brennstoffs, beispielsweise von Erdgas, und des sauerstoffhaltigen Oxidationsmittels weiter aufgeheizt, bis die Selbstentzündungstemperatur für das Partialoxidations-Reaktionsgemisch aus fluidem kohlenstoffhaltigem Brennstoff und sauerstoffhaltigem Oxidationsmittel erreicht wird. Wieder wird vorzugsweise auf eine etwas höhere Temperatur von beispielsweise über 1100 °C aufgeheizt, um die Selbstentzündung des Partialoxidations-Reaktionsgemischs sicher zu gewährleisten. Sodann wird durch Zuführen der entsprechenden Medien die Partialoxidationsreaktion in Gang gesetzt, ohne dass es eines Zündens mittels einer Zündvorrichtung am POX-Brenner bedarf.

Da auf diese Weise der Brennerwechsel bei niedrigeren Temperaturen, also beispielsweise bei 750 °C statt bei über 1100 °C, durchgeführt werden kann, resultiert eine geringere Wärmestrahlungsbelastung des Bedienpersonals und geringerer Temperaturabfall beim Brennerwechsel.

### Bevorzugte Ausgestaltungen der Erfindung

In einem zweiten Aspekt der Erfindung ist der Partialoxidationsreaktor dadurch gekennzeichnet, dass der Aufheizbrenner folgende Bestandteile aufweist:
(c2) eine Brenneraußenwand des Aufheizbrenners mit einer zweiten lösbaren Verbindungsvorrichtung zum gasdichten Verbinden des Aufheizbrenners mit dem zentralen ersten Zufuhrkanal, mit dem zweiten Zufuhrkanal, mit dem äußersten Zufuhrkanal oder mit einem optionalen weiteren Zufuhrkanal des POX-Brenners.
Je nach Platzbedarf des Aufheizbrenners bestehen somit vielfältige Möglichkeiten, um eine geeignete Einbauöffnung für diese zu schaffen.

In einem dritten Aspekt der Erfindung ist der Partialoxidationsreaktor dadurch gekennzeichnet, dass der Aufheizbrenner eine elektrische Zündvorrichtung umfasst. Auf diese Weise wird ein sicherer Zündvorgang des Brennstoff-Oxidationsmittel-Gemischs gewährleistet.

In einem vierten Aspekt der Erfindung ist der Partialoxidationsreaktor dadurch gekennzeichnet, dass der Aufheizbrenner einen Flammendetektor umfasst.

In einem fünften Aspekt der Erfindung ist der Partialoxidationsreaktor dadurch gekennzeichnet, dass der Reaktorbehälter eine Temperaturmessvorrichtung zur Bestimmung der Innentemperatur des Reaktorbehälters, bevorzugt der Innenwand des Reaktorbehälters, umfasst.

In einem sechsten Aspekt der Erfindung ist der Partialoxidationsreaktor dadurch gekennzeichnet, dass mindestens einer der Zufuhrkanäle des POX-Brenners mit einer Verwirbelungseinrichtung ausgestattet ist, die dem entsprechenden Medienstrom einen Drall um die Längsachse des Brenners herum und senkrecht zur Strömungsrichtung erteilt. Hierdurch wird die Vermischung des entsprechenden Mediums mit dem aus dem benachbarten Strömungskanal austretenden Medium verbessert. Bevorzugt erfolgt die Vermischung ausschließlich außerhalb des Brenners und es tritt keine Rückvermischung mit noch innerhalb des Brenners befindlichen Medienanteilen, die zu unerwünschten Oxidationsreaktionen innerhalb des Brenners führen könnte.

In einem siebten Aspekt der Erfindung ist der Partialoxidationsreaktor dadurch gekennzeichnet, dass mindestens zwei der Zufuhrkanäle mit Verwirbelungseinrichtungen ausgestattet sind, wobei die Rotationsrichtungen, die den durch die mindestens zwei Zufuhrkanäle strömenden Medien erteilt werden, in Bezug auf die Längsachse des Brenners gegensinnig sind. Hierdurch wird die Vermischung des entsprechenden Mediums mit dem aus dem benachbarten Strömungskanal austretenden Medium noch weiter verbessert.

In einem achten Aspekt der Erfindung ist der Partialoxidationsreaktor dadurch gekennzeichnet, dass die Zufuhrkanäle des POX-Brenners so ausgestaltet sind, dass eine Vermischung des Brennstoffs, des Moderators und des Oxidationsmittels erst außerhalb des Brenners erfolgt. Auf diese Weise ist gewährleistet, dass alle Medien gleichzeitig und unvermischt den Brenner verlassen, so dass Oxidationsreaktionen innerhalb des Brenners vermieden werden.

In einem neunten Aspekt der Erfindung ist der Partialoxidationsreaktor dadurch gekennzeichnet, dass der Reaktorbehälter mit einer feuerfesten Ausmauerung oder Auskleidung ausgestattet ist.

In einem zehnten Aspekt der Erfindung ist der Partialoxidationsreaktor dadurch gekennzeichnet, dass der POX-Brenner ohne separat zugeführte Kühlmedien betrieben wird. Dies wird beispielsweise dadurch ermöglicht, dass aufgrund der Ausgestaltung des Brenners, beispielsweise mittels einer geeigneten Ausgestaltung der Zufuhrkanäle des POX-Brenners, die exothermen Oxidationsreaktionen ausschließlich im Reaktorbehälter ablaufen, nicht dagegen innerhalb des Brenners. Auf diese Weise kann auf das störungsanfällige Zuführen eines fluiden Kühlmittels verzichtet werden. Gegen die aus der Reaktionskammer auf den Brenner einwirkende Strahlungswärme können durch entsprechende Materialauswahl bzw. das Anbringen einer Isolierschicht Vorkehrungen getroffen werden. Da zudem keine Kanäle für Kühlmedien mit eigenem Platzbedarf vorgesehen werden müssen, gestaltet sich der Ausbau und Einbau der Innenrohre des POX-Brenners und des Aufheizbrenners einfacher.

In einem elften Aspekt der Erfindung ist der Partialoxidationsreaktor dadurch gekennzeichnet, dass die erste lösbare Verbindungsvorrichtung und die zweite lösbare Verbindungsvorrichtung als Flansche ausgestaltet sind, die jeweils mindestens ein Dichtungselement und eine Vielzahl von lösbaren Befestigungselementen umfassen, wobei
- das mindestens eine Dichtungselement der zweiten lösbaren Verbindungsvorrichtung kleiner ausgestaltet ist als das mindestens eine Dichtungselement der ersten lösbaren Verbindungsvorrichtung,
- die Vielzahl von lösbaren Befestigungselementen für die die zweite lösbare Verbindungsvorrichtung kleiner ist als die Vielzahl von lösbaren Befestigungselementen für die erste lösbare Verbindungsvorrichtung.
Vorteilhaft ist es dabei, dass eine kleinere Verbindungsvorrichtung schneller demontierbar und remontierbar ist und leichter abzudichten ist. Wenn beide Verbindungsvorrichtungen beispielsweise als Flansche ausgestaltet sind, weisen die kleineren Flansche der zweiten lösbare Verbindungsvorrichtung weniger Schraublöcher auf, so dass das Demontieren und das Remontieren schneller durchgeführt werden kann als bei dem Hauptflansch zwischen POX-Brenner und Reaktorbehälter als erster lösbarer Verbindungsvorrichtung. Die Schrauben und ggf. Muttern, die das Innenrohr bzw. die Innenrohre mit dem Rest des POX-Brenners verbinden, sind dann kleiner und in geringerer Anzahl vorhanden. Daher ist es einfacher und weniger zeitaufwendig, sie festzuziehen. Ferner ist es einfacher, mit dem in der zweiten, kleineren Verbindungsvorrichtung verwendeten Dichtungselement, beispielsweise einer ringförmigen Flachdichtung im Falle einer Flanschverbindung, eine gasdichte Verbindung herzustellen, da das Risiko von Undichtigkeiten durch ungleichmäßiges Festziehen wegen der geringeren Anzahl der Schrauben sinkt.

In einem dreizehnten Aspekt der Erfindung ist das Verfahren zur Inbetriebnahme eines Partialoxidationsreaktors dadurch gekennzeichnet, dass
- der erste Zielwert der Innentemperatur des Reaktorbehälters, bevorzugt der Temperatur der Innenwand des Reaktorbehälters, auf eine Temperatur zwischen 600 und 1000 °C, bevorzugt zwischen 700 und 800 °C festgelegt wird,
- der zweite Zielwert der Innentemperatur des Reaktorbehälters, bevorzugt der Temperatur der Innenwand des Reaktorbehälters, auf eine Temperatur zwischen 800 und 1300 °C, bevorzugt zwischen 1000 und 1200 °C festgelegt wird.

Der Aufheizprozess wird durch Zünden des Aufheizbrenners gestartet und solange betrieben, bis der erste Zielwert der Innentemperatur des Reaktorbehälters erreicht wird, der der Selbstentzündungstemperatur für ein Brennstoff-Oxidationsmittel-Gemisch, beispielweise Erdgas-Luft, entspricht. Diese kann beispielweise im Falle von Erdgas als Brennstoff ca. 600 °C betragen, wobei vorzugsweise auf eine etwas höhere Temperatur zwischen 600 und 1000 °C, bevorzugt zwischen 700 und 800 °C, beispielsweise 750 °C, aufgeheizt wird, um die Selbstentzündung des Brennstoff-Oxidationsmittel-Gemisch sicher zu gewährleisten, ohne dass eine eigene Zündvorrichtung am POX-Brenner erforderlich ist.

Sobald der Reaktorbehälter die erforderliche Selbstentzündungstemperatur erreicht hat, wird der Aufheizbrenner entfernt und die demontierten Zufuhrrohre des POX-Brenners werden remontiert. Nun wird der Partialoxidationsreaktor durch weiteres Zuführen eines Brennstoffs, beispielsweise von Erdgas, und des sauerstoffhaltigen Oxidationsmittels weiter aufgeheizt, bis zweite Zielwert der Innentemperatur des Reaktorbehälters erreicht wird, der der Selbstentzündungstemperatur für das Partialoxidations-Reaktionsgemisch aus fluidem kohlenstoffhaltigem Brennstoff und sauerstoffhaltigem Oxidationsmittel entspricht. Wieder wird vorzugsweise auf eine etwas höhere Temperatur zwischen 800 und 1300 °C, bevorzugt zwischen 1000 und 1200 °C, beispielsweise über 1100 °C aufgeheizt, um die Selbstentzündung des Partialoxidations-Reaktionsgemischs sicher zu gewährleisten. Sodann wird durch Zuführen der entsprechenden Medien die Partialoxidationsreaktion in Gang gesetzt, ohne dass es eines Zündens mittels einer Zündvorrichtung am POX-Brenner bedarf.

Da auf diese Weise der Brennerwechsel bei niedrigeren Temperaturen, also beispielsweise bei 750 °C statt bei über 1100 °C, durchgeführt werden kann, resultiert eine geringere Wärmestrahlungsbelastung des Bedienpersonals und geringerer Temperaturabfall beim Brennerwechsel.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: einen POX-Reaktor mit koaxialen, kreisförmigen bzw. ringförmigen Medienkanälen gemäß Stand der Technik,
- Fig. 2: einen POX-Reaktor gemäß der Erfindung mit montiertem Aufheizbrenner,
- Fig. 3: denselben POX-Reaktor wie in Fig. 2 nach Ausbau des Aufheizbrenners,
- Fig. 4: denselben POX-Reaktor wie in Fig. 2 nach Inbetriebnahme des POX-Brenners,
- Fig. 5: einen POX-Reaktor gemäß der Erfindung mit montiertem Aufheizbrenner in alternativer Ausgestaltung zu Fig. 2.

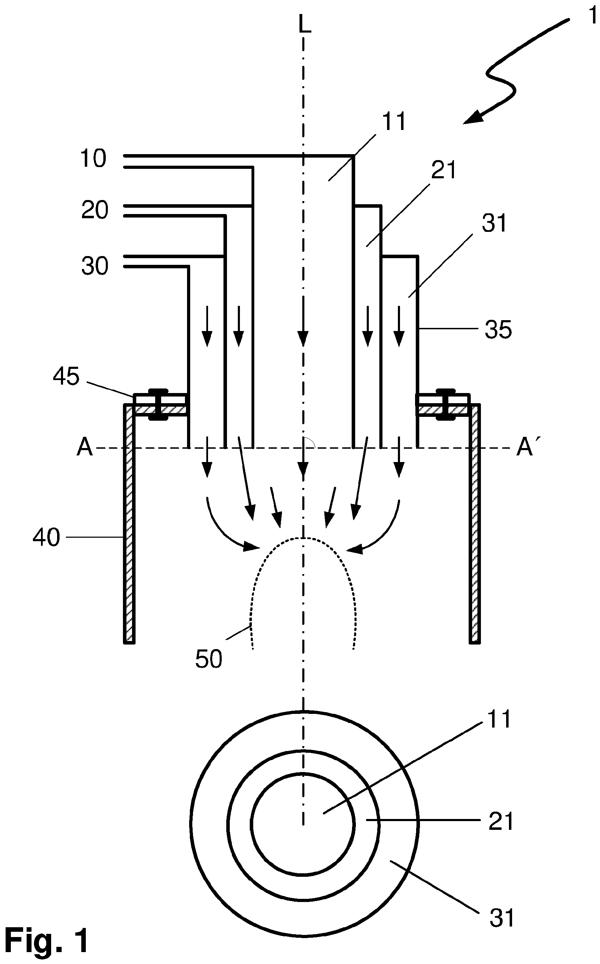

Dem in Fig. 1 bildlich dargestellten, erfindungsgemäßen Partialoxidationsreaktor mit POX-Brenner 1 werden über die Leitungen 10, 20 und 30 das Oxidationsmittel, beispielsweise reiner Sauerstoff oder Luft, der Moderator, beispielsweise ein Wasserdampf/Kohlendioxid-Gemisch oder jedes dieser Medien einzeln, und der fluide kohlenstoffhaltige Brennstoff, beispielsweise Erdgas, zugeführt. Das Oxidationsmittel wird über Leitung 10 in den zentralen, einen kreisförmigen Querschnitt aufweisenden, ersten Zufuhrkanal 11 geführt. Der zweite Zufuhrkanal 21 umgibt den ersten Zufuhrkanal koaxial und konzentrisch; der somit zwischen der Außenwand des ersten Zufuhrkanals und der Innenwand des zweiten Zufuhrkanals gebildete Ringspalt dient der Aufnahme des Moderators, der über Leitung 20 herangeführt wird. Der Brenner umfasst ferner einen den zweiten Zufuhrkanal koaxial und konzentrisch umgebenden dritten Zufuhrkanal 31, wobei zwischen der Außenwand des zweiten Zufuhrkanals und der Innenwand des dritten Zufuhrkanals ein Ringspalt gebildet wird, durch den der über Leitung 30 herangeführte Brennstoff zugeführt wird und wobei die Außenwand des dritten Zufuhrkanals die Brenneraußenwand 35 bildet.

Die Brenneraußenwand 35, die Trennwand zwischen dem zweiten und dem dritten Zufuhrkanal 31, 21 und die Trennwand zwischen dem ersten und dem zweiten Zufuhrkanal 21, 11 können optional einer gemeinsamen Ebene A - A' enden, die senkrecht zur Längsachse L des Brenners verläuft und die Brennermündung bildet. Dies hat die oben erörterten Vorteile, insbesondere, dass eine Vermischung der Medien erst außerhalb des Brenners erfolgt; diese spezielle Ausgestaltung ist aber für die grundsätzliche Funktionsweise der Erfindung nicht zwingend erforderlich. Optional können bei dieser Ausgestaltung Mittel oder Vorrichtungen zum Hindurchleiten eines fluiden Kühlmittels durch den POX-Brenner entfallen.

Der POX-Brenner ist mittels der ersten lösbaren Verbindungsvorrichtung 45 mit dem Reaktorbehälter 40 verbunden. Diese ist hier als Flansch angedeutet. Zwei Schrauben-Muttern-Paare zur Befestigung wurden zeichnerisch angedeutet.

Die Partialoxidation des Erdgases verläuft im vorliegenden Beispiel unter Ausbildung einer Flamme 50, die gestrichelt angedeutet ist.

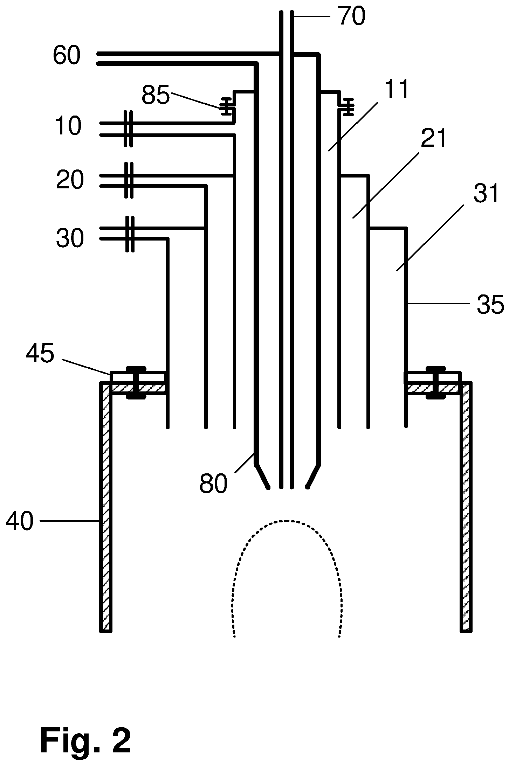

Fig. 2 zeigt einen POX-Reaktor gemäß der Erfindung mit montiertem Aufheizbrenner 80. Dieser umfasst Zufuhrleitungen 60, 70 für ein Brenngas, im vorliegenden Fall Erdgas, und für das sauerstoffhaltige Oxidationsmittel, im vorliegenden Fall Luft. Im Ausführungsbeispiel der Fig. 2 wurde der Aufheizbrenner über den zentralen ersten Zufuhrkanal in den POX-Brenner eingeführt und mittels der zweiten lösbaren Verbindungsvorrichtung 85 mit dem POX-Brenner verbunden (Brennerflansch).

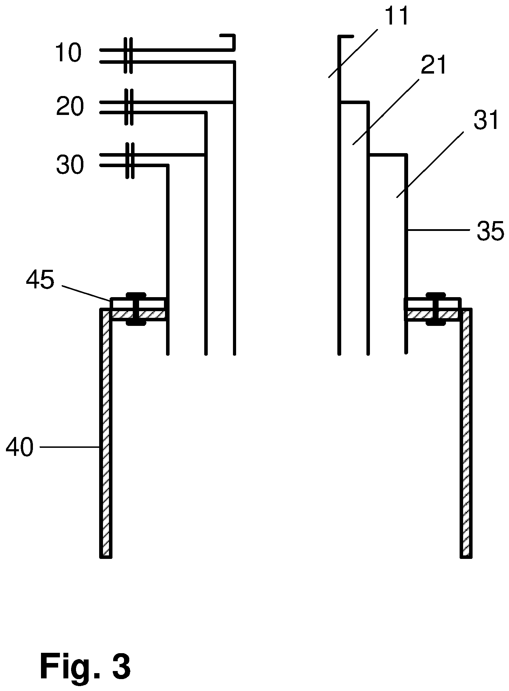

Fig. 3 zeigt denselben POX-Reaktor wie in Fig. 2 nach erfolgtem Aufheizen bis zum ersten Zielwert der Innentemperatur des Reaktorbehälters und nachfolgendem Ausbau des Aufheizbrenners aus dem zentralen ersten Zufuhrkanal.

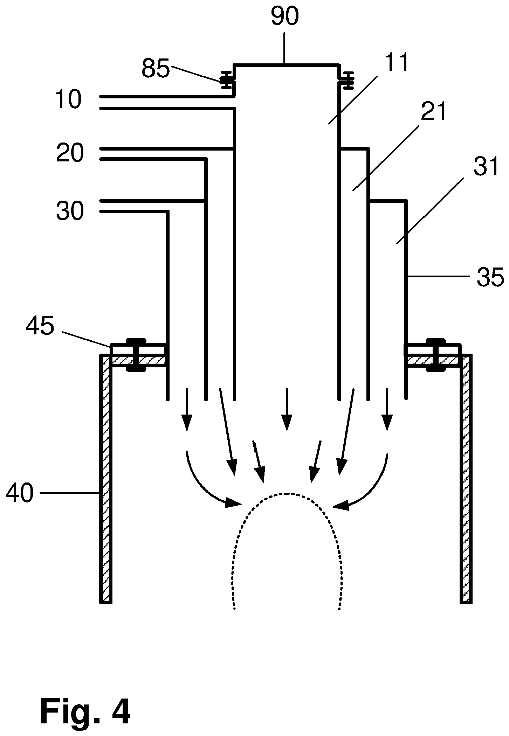

Fig. 4 zeigt denselben POX-Reaktor wie in Fig. 2 und 3 nach Inbetriebnahme des POX-Brenners bzw. während des Aufheizens bis zum zweiten Zielwert der Innentemperatur des Reaktorbehälters. Der zentrale erste Zufuhrkanal wurde mittels einer Verschlussvorrichtung 90, beispielsweise einem Deckel oder einer Kappe, mittels der zweiten lösbaren Verbindungsvorrichtung gasdicht verschlossen. Die Zuleitungen 10, 20, 30 wurden zwecks Zufuhr des Oxidationsmittels, des Moderators und des fluiden kohlenstoffhaltigen Brennstoffs oder des Brenngases geöffnet.

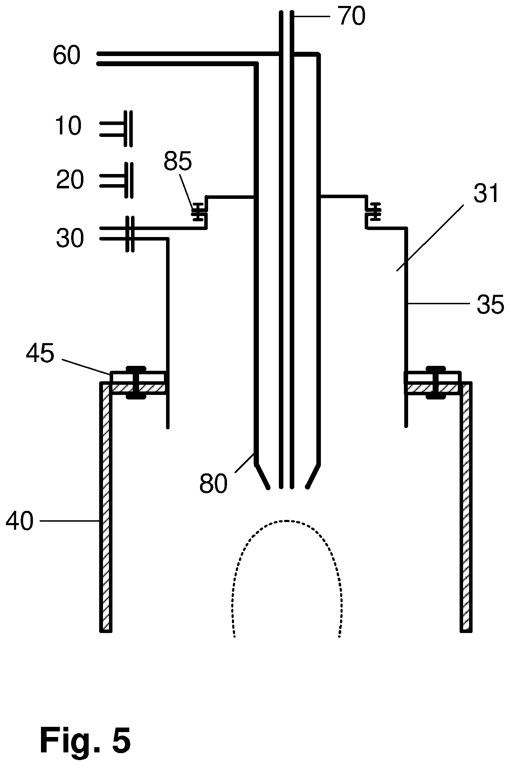

Fig. 5 zeigt einen POX-Reaktor gemäß der Erfindung mit montiertem Aufheizbrenner 80 in alternativer Ausgestaltung zu Fig. 2. In der in Fig. 5 gezeigten Ausgestaltung wurden alle Zuleitungsrohre des POX-Brenners bis auf das äußerste Rohr entfernt. Der Aufheizbrenner wurde über den dritten Zufuhrkanal 31 in den POX-Brenner eingeführt und ist mittels der zweiten lösbaren Verbindungsvorrichtung 85 mit dem POX-Brenner verbunden. Vorteilhaft ist hierbei, dass somit eine größere Einbauöffnung für den Einbau des Aufheizbrenners zur Verfügung steht.

### Bezugszeichenliste

- [1]: Partialoxidationsreaktor mit POX-Brenner
- [10]: Zuleitung Oxidationsmittel
- [11]: erster Zufuhrkanal
- [20]: Zuleitung Moderator
- [21]: zweiter Zufuhrkanal
- [30]: Zuleitung Brennstoff
- [31]: dritter Zufuhrkanal
- [35]: Brenneraußenwand
- [40]: Reaktorbehälter
- [45]: erste lösbare Verbindungsvorrichtung (Hauptflansch)
- [50]: Flamme
- [60]: Zufuhrleitung für Brenngas (Erdgas)
- [70]: Zufuhrleitung für sauerstoffhaltiges Oxidationsmittel (Luft)
- [80]: Aufheizbrenner
- [85]: zweite lösbare Verbindungsvorrichtung (Brennerflansch)
- [90]: Verschlussvorrichtung

- L: Längsachse Brenner

## Patentansprüche

1. Partialoxidationsreaktor (POX-Reaktor) mit Aufheizbrenner zum Herstellen von Synthesegas durch partielle Oxidation von fluiden kohlenstoffhaltigen Brennstoffen in Gegenwart eines sauerstoffhaltigen Oxidationsmittels, umfassend:
(a) einen Partialoxidationsbrenner (POX-Brenner),
(b) einen mit dem POX-Brenner gasdicht verbindbaren Reaktorbehälter,
(c) einen mit dem POX-Brenner gasdicht verbindbaren Aufheizbrenner,
wobei der POX-Brenner folgende Bestandteile umfasst:
(a1) Leitungen zum getrennten Zuführen eines fluiden kohlenstoffhaltigen Brennstoffs, des sauerstoffhaltigen Oxidationsmittels und optional eines Moderators,
(a2) einen zentralen ersten Zufuhrkanal, der bevorzugt einen kreisförmigen Querschnitt aufweist,
(a3) einen den ersten Zufuhrkanal koaxial und konzentrisch umgebenden, zweiten Zufuhrkanal, wobei zwischen der Außenwand des ersten Zufuhrkanals und der Innenwand des zweiten Zufuhrkanals ein Ringspalt gebildet wird,
(a4) optional mindestens einen weiteren, den zweiten Zufuhrkanal koaxial und konzentrisch umgebenden Zufuhrkanal, wobei zwischen der Außenwand des zweiten Zufuhrkanals und der Innenwand des weiteren Zufuhrkanals ein Ringspalt gebildet wird,
(a5) wobei die Außenwand des äußersten Zufuhrkanals die Brenneraußenwand des POX-Brenners bildet,
(a6) eine erste lösbare Verbindungsvorrichtung zum gasdichten Verbinden des POX-Brenners mit dem Reaktorbehälter,
wobei der Aufheizbrenner folgende Bestandteile aufweist:
(c1) Leitungen zum getrennten Zuführen des kohlenstoffhaltigen Brennstoffs oder eines weiteren Brenngases, bevorzugt Erdgas oder Propan, und des sauerstoffhaltigen Oxidationsmittels,
(c2) eine Brenneraußenwand des Aufheizbrenners mit einer zweiten lösbaren Verbindungsvorrichtung zum gasdichten Verbinden des Aufheizbrenners mit einem Zufuhrkanal des POX-Brenners,
(c3) eine Zündvorrichtung.

2. Partialoxidationsreaktor nach Anspruch 1, **dadurch gekennzeichnet, dass** der Aufheizbrenner folgende Bestandteile aufweist:
(c2) eine Brenneraußenwand des Aufheizbrenners mit einer zweiten lösbaren Verbindungsvorrichtung zum gasdichten Verbinden des Aufheizbrenners mit dem zentralen ersten Zufuhrkanal, mit dem zweiten Zufuhrkanal, mit dem äußersten Zufuhrkanal oder mit einem optionalen weiteren Zufuhrkanal des POX-Brenners.

3. Partialoxidationsreaktor nach Anspruch 1 oder 2, **dadurch gekennzeichnet, dass** der Aufheizbrenner eine elektrische Zündvorrichtung umfasst.

4. Partialoxidationsreaktor nach einem der vorigen Ansprüche, **dadurch gekennzeichnet, dass** der Aufheizbrenner einen Flammendetektor umfasst.

5. Partialoxidationsreaktor nach einem der vorigen Ansprüche, **dadurch gekennzeichnet, dass** der Reaktorbehälter eine Temperaturmessvorrichtung zur Bestimmung der Innentemperatur des Reaktorbehälters, bevorzugt der Innenwand des Reaktorbehälters, umfasst.

6. Partialoxidationsreaktor nach einem der vorigen Ansprüche, **dadurch gekennzeichnet, dass** mindestens einer der Zufuhrkanäle des POX-Brenners mit einer Verwirbelungseinrichtung ausgestattet ist.

7. Partialoxidationsreaktor nach einem der vorigen Ansprüche, **dadurch gekennzeichnet, dass** mindestens zwei der Zufuhrkanäle mit Verwirbelungseinrichtungen ausgestattet sind, wobei die Rotationsrichtungen, die den durch die mindestens zwei Zufuhrkanäle strömenden Medien erteilt werden, in Bezug auf die Längsachse des Brenners gegensinnig sind.

8. Partialoxidationsreaktor nach einem der vorigen Ansprüche, **dadurch gekennzeichnet, dass** die Zufuhrkanäle des POX-Brenners so ausgestaltet sind, dass eine Vermischung des Brennstoffs, des Moderators und des Oxidationsmittels erst außerhalb des Brenners erfolgt.

9. Partialoxidationsreaktor nach einem der vorigen Ansprüche, **dadurch gekennzeichnet, dass** der Reaktorbehälter mit einer feuerfesten Ausmauerung oder Auskleidung ausgestattet ist.

10. Partialoxidationsreaktor nach einem der vorigen Ansprüche, **dadurch gekennzeichnet, dass** der POX-Brenner ohne separat zugeführte Kühlmedien betrieben wird.

11. Partialoxidationsreaktor nach einem der vorigen Ansprüche, **dadurch gekennzeichnet, dass** die erste lösbare Verbindungsvorrichtung und die zweite lösbare Verbindungsvorrichtung als Flansche ausgestaltet sind, die jeweils mindestens ein Dichtungselement und eine Vielzahl von lösbaren Befestigungselementen umfassen, wobei
- das mindestens eine Dichtungselement der zweiten lösbaren Verbindungsvorrichtung kleiner ausgestaltet ist als das mindestens eine Dichtungselement der ersten lösbaren Verbindungsvorrichtung,
- die Vielzahl von lösbaren Befestigungselementen für die die zweite lösbare Verbindungsvorrichtung kleiner ist als die Vielzahl von lösbaren Befestigungselementen für die erste lösbare Verbindungsvorrichtung.

12. Verfahren zur Inbetriebnahme eines Partialoxidationsreaktors (POX-Reaktor) zum Herstellen von Synthesegas durch partielle Oxidation von fluiden kohlenstoffhaltigen Brennstoffen in Gegenwart eines sauerstoffhaltigen Oxidationsmittels, umfassend folgende Schritte:
(a) Bereitstellen eines POX-Reaktors nach Anspruch 1 bis 11,
(b) Bereitstellen eines kohlenstoffhaltigen Brennstoffs in fluider Form, des sauerstoffhaltigen Oxidationsmittels, optional eines Moderators und optional eines weiteren Brenngases,
(c) gasdichtes Verbinden des POX-Brenners mit dem Reaktorbehälter mittels der ersten lösbaren Verbindungsvorrichtung,
(d) Einführen des Aufheizbrenners in einen Zufuhrkanal des POX-Brenners und gasdichtes Verbinden des POX-Brenners mit dem Aufheizbrenner mittels der zweiten lösbaren Verbindungsvorrichtung,
(e) Verschließen der Leitungen des POX-Brenners zum getrennten Zuführen des kohlenstoffhaltigen Brennstoffs, des sauerstoffhaltigen Oxidationsmittels und des optionalen Moderators,
(f) Zuführen des kohlenstoffhaltigen Brennstoffs oder des weiteren Brenngases und des sauerstoffhaltigen Oxidationsmittels zum Aufheizbrenner, Vermischen dieser Gase und Zünden des Gasgemischs mittels der Zündvorrichtung,
(g) Wiederholtes oder kontinuierliches Messen der Innentemperatur des Reaktorbehälters, bevorzugt der Temperatur der Innenwand des Reaktorbehälters, mittels der Temperaturmessvorrichtung,
(h) Beenden des Zuführens des kohlenstoffhaltigen Brennstoffs oder des weiteren Brenngases und des sauerstoffhaltigen Oxidationsmittels zum Aufheizbrenner, wenn ein festgelegter erster Zielwert der Innentemperatur des Reaktorbehälters, bevorzugt der Temperatur der Innenwand des Reaktorbehälters, erreicht wird,
(i) Lösen der zweiten lösbaren Verbindungsvorrichtung, Entfernen des Aufheizbrenners und Verschließen der entstandenen Öffnung mittels einer Verschlussvorrichtung,
(j) Öffnen der Leitungen des POX-Brenners zum getrennten Zuführen des kohlenstoffhaltigen Brennstoffs, des sauerstoffhaltigen Oxidationsmittels und des optionalen Moderators, Einleiten dieser Medien in den POX-Reaktor und Umsetzen des kohlenstoffhaltigen Brennstoffs mit dem sauerstoffhaltigen Oxidationsmittel unter Aufheizbedingungen bis zum Erreichen eines festgelegten zweiten Zielwerts der Innentemperatur des Reaktorbehälters,
(k) Umsetzen des kohlenstoffhaltigen Brennstoffs mit dem sauerstoffhaltigen Oxidationsmittel unter Bedingungen der partiellen Oxidation und Ausleiten eines Rohsynthesegases aus dem POX-Reaktor und optional Zuleiten des Rohsynthesegases zu weiteren Konditionierungs- oder Verarbeitungsschritten.

13. Verfahren nach Anspruch 12, **dadurch gekennzeichnet, dass**
- der erste Zielwert der Innentemperatur des Reaktorbehälters, bevorzugt der Temperatur der Innenwand des Reaktorbehälters, auf eine Temperatur zwischen 600 und 1000 °C, bevorzugt zwischen 700 und 800 °C festgelegt wird,
- der zweite Zielwert der Innentemperatur des Reaktorbehälters, bevorzugt der Temperatur der Innenwand des Reaktorbehälters, auf eine Temperatur zwischen 800 und 1300 °C, bevorzugt zwischen 1000 und 1200 °C festgelegt wird.
